# EUROPÄISCHE PATENTSCHRIFT

(11) **EP 3 507 875 B1**
(45) Veröffentlichungstag und Bekanntmachung des Hinweises auf die Patenterteilung: **10.08.2022**
(21) Anmeldenummer: 17783750.7
(22) Anmeldetag: 25.09.2017
(51) Int. Cl.: H02G 7/12, B60M 1/23, B60M 1/30

(54) **VERBINDUNGSEINRICHTUNG, TRAGANORDNUNG UND VERFAHREN ZUM VERBINDEN EINER DECKENSTROMSCHIENE MIT WENIGSTENS EINEM TRAGSEIL**
CONNECTING DEVICE, LOAD-BEARING ARRANGEMENT AND METHOD FOR CONNECTING AN OVERHEAD CONDUCTOR RAIL TO AT LEAST ONE LOAD-BEARING CABLE
DISPOSITIF DE RACCORDEMENT, ENSEMBLE SUPPORT ET PROCÉDÉ DE RACCORDEMENT D'UN RAIL CONDUCTEUR AÉRIEN À AU MOINS UN CÂBLE PORTEUR

(30) Priorität: 25.10.2016 DE 102016220953
(43) Veröffentlichungstag der Anmeldung: 10.07.2019
(73) Patentinhaber: Siemens Mobility GmbH, 81739 München (DE)
(72) Erfinder: JUNG, Frederik, 91330 Eggolsheim (DE); MIELSCH, Florian, 90587 Veitsbronn (DE)
(86) Internationale Anmeldenummer: PCT/EP2017/074175
(87) Internationale Veröffentlichungsnummer: WO 2018/077551

(56) Entgegenhaltungen:
- EP-A1- 2 072 322
- DE-A1- 1 465 725
- DE-U1- 8 425 823
- DE-U1- 9 314 869
- US-A- 3 970 286
- US-A1- 2014 138 593

## Beschreibung

Die Erfindung betrifft eine Verbindungseinrichtung zum Verbinden einer Deckenstromschiene mit wenigstens einem Tragseil, mit wenigstens einer Deckenstromschienenvorrichtung, die zum Verbinden mit der Deckenstromschiene ausgebildet ist, und mit wenigstens einer Tragseilvorrichtung, die zum Verbinden mit dem wenigstens einen Tragseil ausgebildet ist.

Die Erfindung betrifft weiterhin eine Traganordnung für wenigstens eine Deckenstromschiene, mit mehreren Stützelementen, mit wenigstens einem Tragseil, das mit den Stützelementen jeweils an einer Verbindungsstelle verbunden ist, und mit wenigstens einer mit dem wenigstens einen Tragseil verbundenen Verbindungseinrichtung, die zum Verbinden der Deckenstromschiene mit dem wenigstens einen Tragseil ausgebildet ist.

Schließlich betrifft die Erfindung noch ein Verfahren zum Verbinden einer Deckenstromschiene mit wenigstens einem Tragseil, bei dem die Deckenstromschiene mit wenigstens einer Verbindungseinrichtung und die Verbindungseinrichtung mit dem wenigstens einen Tragseil verbunden werden.

Verbindungseinrichtungen, Traganordnungen sowie Verfahren der oben genannten Art sind aus dem Stand der Technik bereits bekannt. Deckenstromschienen, die auch als Stromschienenoberleitung bezeichnet werden, bestehen üblicherweise aus starren Verbund- oder Vollprofilen, die entlang von Fahrstrecken oberhalb der Fahrzeugbegrenzungslinie angebracht sind. Die Deckenstromschienen versorgen die Fahrzeuge, beispielsweise Schienenfahrzeuge, mit elektrischer Energie über einen auf dem Dach des Fahrzeugs angebrachten Stromabnehmer. Die eingangs genannten Verbindungseinrichtungen und Traganordnungen dienen der Befestigung der Deckenstromschiene. Da die horizontale Lage der Deckenstromschiene für den störungsfreien Betrieb einer verkehrstechnischen Anlage, beispielsweise einer eisenbahntechnischen Anlage, wichtig ist, ist eine Durchbiegung der Deckenstromschiene in vertikaler Richtung möglichst gering zu halten. Ein ausreichend große Anzahl von Befestigungspunkten der Deckenstromschiene verhindert einen zu großen Durchhang und auch einen zu großen Windabtrieb. Allerdings ist eine große Anzahl von Befestigungspunkten auch mit hohen Kosten verbunden, wenn die Deckenstromschiene an jedem Befestigungspunkt mit einem Stützelement, wie beispielsweise einem Mast, einem Portal oder einem anderen Bauwerk, verbunden werden muss. Stützelemente können natürlich auch Gebäudebefestigungen oder Befestigungen an Strukturen wie z. B. unter einer Brücke sein. Um die Anzahl der Stützelemente zu verkleinern, wird beispielsweise in der EP 2 072 322 A1 eine Konstruktion vorgeschlagen, durch die der Abstand der Stützelemente vergrößert werden kann. Allerdings ist die in der EP 2 072 322 A1 vorgeschlagene Konstruktion relativ aufwendig und daher mit einem relativ hohem Kosten- und Montageaufwand verbunden.

Der Erfindung liegt daher die Aufgabe zugrunde, eine Verbindungseinrichtung, eine Traganordnung und ein Verfahren der eingangs genannten Art vorzuschlagen, durch die eine Traganordnung gegenüber dem Stand der Technik konstruktiv einfacher und damit kostengünstiger ausgestaltet werden kann.

Die erfindungsgemäße Verbindungseinrichtung der eingangs genannten Art löst die Aufgabe dadurch, dass die Tragseilvorrichtung für eine Bewegung des Tragseils relativ zur Tragseilvorrichtung in einer Tragseillängsrichtung ausgebildet ist.

Die Traganordnung der oben genannten Art löst die Aufgabe dadurch, dass die wenigstens eine Verbindungseinrichtung für eine Bewegung des Tragseils in einer Tragseillängsrichtung relativ zur Verbindungseinrichtung ausgebildet ist.

Das Verfahren der eingangs genannten Art löst die Aufgabe dadurch, dass das wenigstens eine Tragseil in einer Tragseillängsrichtung beweglich verbunden wird.

Die erfindungsgemäße Lösung hat den Vorteil, dass die in Tragseillängsrichtung bewegliche Verbindung zwischen Verbindungseinrichtung und Tragseil sowohl auf Seiten der Deckenstromschiene als auch auf Seiten des Tragseils konstruktiv relativ einfach ausgebildet werden kann. So kann das Tragseil sehr einfach in die Verbindungseinrichtung eingefädelt werden und muss nicht mit fester Länge an der Verbindungseinrichtung fixiert werden. Dadurch ist die Verbindungseinrichtung relativ zum Tragseil beweglich ausgebildet, so dass beispielsweise bei Temperaturänderungen eine eigenständige Ausrichtung der Verbindungseinrichtung am Tragseil in der Tragseillängsrichtung möglich ist. Die Verbindung der Verbindungseinrichtung zum Tragseil kann beispielsweise als Gleit- oder Wälzführung mit wenigstens dem einen Freiheitsgrad in der Tragseillängsrichtung ausgebildet sein. Die temperaturbedingte Verschiebung der Deckenstromschiene kann somit erfindungsgemäß durch eine Relativbewegung zwischen Tragseil und Verbindungseinrichtung, insbesondere Tragseilvorrichtung, ausgeglichen werden. Durch die erfindungsgemäße Lösung kann eine Traganordnung für eine Deckenstromschiene mit relativ großem Stützelementabstand realisiert werden, die konstruktiv einfach und leicht zu montieren ist. Durch die in Längsrichtung des Tragseils verschiebbare Verbindungseinrichtung muss das Tragseil bei der Montage lediglich durch die wenigstens eine Tragseilvorrichtung gezogen werden und frühestens am nächsten Stützelement verspannt werden. So ist eine besonders einfache Montage der erfindungsgemäßen Traganordnung möglich. Ferner reduziert sich auch die Anzahl der für die Traganordnung nötigen Tragseile gegenüber dem Stand der Technik.

Durch die erfindungsgemäße Lösung sind Verbindungseinrichtung und Tragseil in Tragseillängsrichtung entkoppelt. Die Zugkraft ist überall im Tragseil gleich.

Die erfindungsgemäße Lösung kann durch vorteilhafte Ausgestaltungen weiterentwickelt werden, die im Folgenden beschrieben sind.

So kann die erfindungsgemäße Verbindungseinrichtung wenigstens eine weitere Tragseilvorrichtung aufweisen, die zum Verbinden mit wenigstens einem weiteren Tragseil ausgebildet ist. Dies hat den Vorteil, dass eine sich ausgleichende Verspannung der Verbindungseinrichtung in zwei entgegengesetzte Richtungen möglich ist und eine zuverlässige Befestigung der Deckenstromschiene mit geringem Windabtrieb gewährleistet ist. Insbesondere wird hierdurch ein Durchhang der Deckenstromschiene und der Windabtrieb der Deckenstromschiene begrenzt. Die wenigstens zwei Tragseilvorrichtungen der erfindungsgemäßen Verbindungseinrichtung sind dabei vorteilhafterweise nebeneinander, beispielsweise symmetrisch zueinander, angeordnet. Hierdurch wird ein Verkanten der im Betrieb mit der Deckenstromschiene verbundenen Verbindungseinrichtung verhindert.

Um eine relativ leichtgängige Bewegung der Verbindungseinrichtung relativ zum Tragseil zu erreichen, kann die wenigstens eine Tragseilvorrichtung wenigstens eine Seilrolle aufweisen. Durch eine solche beispielsweise wälzgelagerte Tragseilrolle ist ein Anfangswiderstand durch eine Haftreibung verringert, so dass auch bei kleinen Längenänderungen in der Deckenstromschiene und/oder dem Tragseil ein Ausgleich stattfinden kann.

In einer weiteren vorteilhaften Ausgestaltung kann die Verbindungseinrichtung wenigstens ein Gelenk aufweisen, durch das die wenigstens eine Tragseilvorrichtung um wenigstens eine parallel zur Längsrichtung der Deckenstromschiene verlaufende Achse relativ zur Deckenstromschienenvorrichtung beweglich ausgebildet ist. Dies hat den Vorteil, dass ein Verkanten der Deckenstromschiene bzw. der Deckenstromschienenvorrichtung verhindert wird. Weiterhin kann sich die wenigstens eine Tragseilvorrichtung am jeweiligen Tragseil frei ausrichten. Das Gelenk kann beispielsweise als Drehgelenk ausgebildet sein.

Um eine konstruktiv einfache Deckenstromschienenvorrichtung bereitzustellen, kann die Deckenstromschienenvorrichtung zum festen Verbinden mit der Deckenstromschiene ausgebildet sein. Da der Längenausgleich zwischen Deckenstromschiene und Tragseil erfindungsgemäß durch die Tragseilvorrichtung erreicht wird, kann die Deckenstromschienenvorrichtung ohne Nachteil konstruktiv einfach ausgebildet sein. Die sonst übliche Gleitführung kann eingespart werden. Eine konstruktiv einfache Verbindung wird insbesondere dadurch erreicht, dass die Deckenstromschienenvorrichtung für eine feste und insbesondere eine kraftschlüssige und/oder formschlüssige Verbindung zur Deckenstromschiene ausgebildet ist. Die kraftschlüssige Verbindung ist hierbei zu bevorzugen, da hierfür keine Veränderungen an der Konstruktion der Deckenstromschiene nötig sind. Theoretisch ist auch eine stoffschlüssige Verbindung zwischen Deckenstromschienenvorrichtung und Deckenstromschiene möglich. Allerdings hat diese den Nachteil, dass sie schwerer wieder gelöst werden kann.

In einer vorteilhaften Ausgestaltung der erfindungsgemäßen Traganordnung kann diese wenigstens eine Verbindungseinrichtung nach einer der zuvor genannten vorteilhaften Ausführungsformen aufweisen. Dies hat die oben bereits beschriebenen Vorteile.

Um die erfindungsgemäße Traganordnung konstruktiv weiter zu vereinfachen, kann wenigstens eines der Stützelemente wenigstens eine Umlenkeinrichtung aufweisen, mittels der das wenigstens eine Tragseil an der Verbindungsstelle umgelenkt ist und eine Bewegung des Tragseils relativ zum Stützelement in Tragseillängsrichtung möglich ist. So muss jedes Tragseil der Tragseilanordnung weniger häufig fest in Tragseillängsrichtung an Stützelementen befestigt werden und es kann durch einfaches Einfädeln auch an den mit Umlenkeinrichtungen versehenen Stützelementen montiert werden. Die erfindungsgemäße Traganordnung benötigt nur an den äußersten Stützelementen - dort wo die Tragseile enden - längenfeste Fixierungen der Tragseile. Die Tragseilmontage wird dadurch sehr leicht.

In einer vorteilhaften Ausgestaltung kann die Traganordnung wenigstens zwei Tragseile aufweisen, die beide mit der wenigstens einen Verbindungseinrichtung und den Stützelementen verbunden sind, wobei die Tragseile zueinander und zwischen den Stützelementen im Wesentlichen x-förmig verlaufen. Dies hat den Vorteil, dass eine sehr gute Fixierung der Deckenstromschiene möglich ist und dadurch insbesondere ein geringer Windabtrieb erreicht wird. Der x-förmige Verlauf bedeutet, dass die Tragseile in einer Draufsicht kreuzungsfei verlaufen und lediglich durch die Verbindungseinrichtungen und die Stützelemente verbunden sind. Die Tragseile verlaufen also jeweils zick-zack-förmig, wobei ein Abstand zwischen den Tragseilen an den Verbindungseinrichtungen minimal und an den Stützelementen maximal ist.

Um einen möglichst geringen Durchhang der Deckenstromschiene zu erreichen, kann die Traganordnung wenigstens eine Spannvorrichtung aufweisen, die zum Spannen des wenigstens einen Tragseils ausgebildet ist. Das Tragseil wird durch die erfindungsgemäße Spannvorrichtung mit einer vorbestimmten Seilvorspannung montiert.

Ferner können die Stützelemente jeweils wenigstens eine Befestigungseinrichtung aufweisen, die zum Verbinden der wenigstens einen Deckenstromschiene mit dem jeweiligen Stützelement unter Bewegungsfreiheit der Deckenstromschienen in einer Deckenstromschienenlängsrichtung ausgebildet ist. Dies hat den Vorteil, dass die Deckenstromschiene auch an den Stützelementen befestigt ist. Für die Bewegungsfreiheit der Deckenstromschiene in der Deckenstromschienenlängsrichtung kann die Befestigungseinrichtung beispielsweise Gleitelemente aufweisen.

Schließlich betrifft die Erfindung auch eine Fahrleitungsanlage zur Energieversorgung von wenigstens einem fahrenden Fahrzeug einer verkehrstechnischen Anlage, mit wenigstens einer Deckenstromschiene und mit wenigstens einer Traganordnung für die Deckenstromschiene. Erfindungsgemäß ist die Traganordnung nach einer der zuvor genannten Ausführungsformen ausgebildet, um die Anlage konstruktiv zu vereinfachen.

Im Folgenden wird die Erfindung mit Bezug auf die beigefügten Zeichnungen erläutert.

Es zeigen:
- Figur 1: eine schematische Darstellung eines Teils einer beispielhaften Ausführungsform einer erfindungsgemäßen Traganordnung;
- Figur 2: eine schematische Darstellung einer erfindungsgemäßen Verbindungseinrichtung der Traganordnung aus Figur 1;
- Figur 3: eine zusätzliche Ansicht der Verbindungseinrichtung aus Figur 2;
- Figur 4: eine schematische Darstellung eines Teils eines beispielhaften erfindungsgemäßen Stützelements der Traganordnung aus Figur 1;
- Figur 5: eine weitere Ansicht des Stützelements aus Figur 4;
- Figur 6: eine schematische Darstellung eines anderen Teils des Stützelements der Figuren 4 und 5;
- Figur 7: eine schematische Darstellung eines anderen Stützelements einer erfindungsgemäßen Traganordnung;
- Figur 8: eine schematische Darstellung einer Spannvorrichtung für ein Tragseil;
- Figur 9: eine schematische Darstellung einer weiteren beispielhaften Ausführungsform einer erfindungsgemäßen Traganordnung.

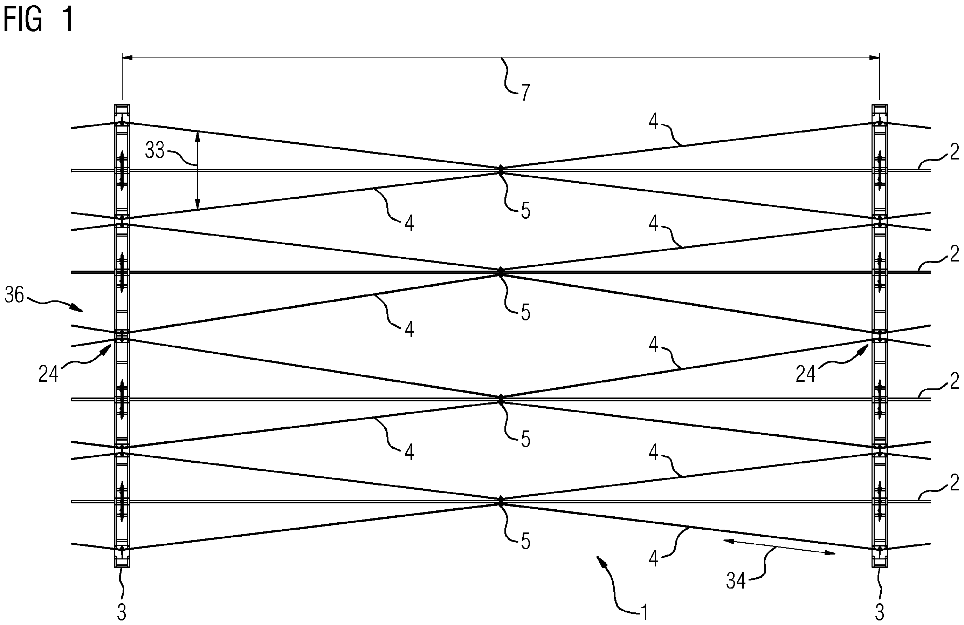

Im Folgenden wird die Erfindung anhand einer in den Figuren 1 bis 7 dargestellten beispielhaften Ausführungsform einer erfindungsgemäßen Traganordnung beschrieben. Dabei werden für gleiche Teile gleiche Bezugszeichen verwendet.

In Figur 1 ist eine Ausführungsform einer erfindungsgemäßen Traganordnung 1 schematisch in einer Draufsicht dargestellt. Die Traganordnung 1 ist zum Tragen von in der beispielhaften Ausführungform in Figur 1 mehreren parallel zueinander angeordneten Deckenstromschienen 2 ausgebildet. Selbstverständlich kann die Traganordnung 1 auch um Tragen von lediglich einer Deckenstromschiene 2 verwendet werden.

Die Traganordnung 1 weist in der beispielhaften Ausführungsform in Figur 1 mehrere Stützelemente 3, mehrere Tragseile 4 und mehrere Verbindungseinrichtungen 5 auf. Figur 1 zeigt lediglich einen Teil der Traganordnung 1, die sich rechts und links von Figur 1 mit weiteren Stützelementen 3 und Verbindungseinrichtungen 5 und den Tragseilen 4 fortsetzt. Alternativ kann die erfindungsgemäße Traganordnung auch nur zwischen zwei Stützelementen 3 ausgebildet werden.

Die Deckenstromschiene 2, die auch als Stromschienenoberleitung bezeichnet werden kann, ist in bekannter Weise als ein Aluminiumstrangpressprofil ausgebildet, in dem ein Fahrdraht 6 befestigt ist. Eine solche bekannte Deckenstromschiene ist beispielsweise in der EP 2 255 991 A1 beschrieben, auf die hier Bezug genommen wird.

Jede Deckenstromschiene 2 ist an den Stützelementen 3 befestigt, wie im Folgenden noch genauer beschrieben wird.

Die Stützelemente 3 stützen die Deckenstromschienen 2 ab und sind beispielsweise in einem Fundament fest mit dem Boden verbunden. In der beispielhaften Ausführungsform in Figur 1 sind die Stützelemente 3 als Portale ausgebildet. Alternativ können die Stützelemente 3 allerdings auch in bekannter Weise als Masten oder als andere Bauwerke, wie beispielsweise ein Tunnel oder ein Gebäude, ausgebildet sein.

Um die Anzahl der Stützelemente 3 bei der erfindungsgemäßen Traganordnung 1 gering zu halten und einen Abstand 7 zwischen den Stützelementen 3 möglichst groß auszubilden, weist die Traganordnung 1 Verbindungseinrichtungen 5 auf, durch welche die Deckenstromschienen 2 jeweils über Tragseile 4 zusätzlich mit den Stützelementen 3 verbunden sind. Dadurch kann die Anzahl der nötigen Stützelemente gering gehalten werden.

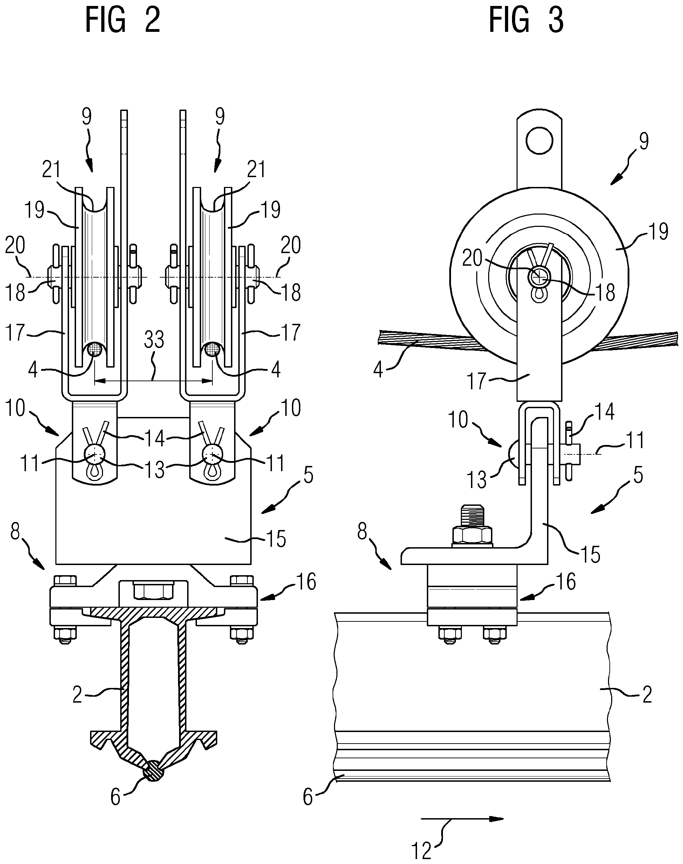

In den Figuren 2 und 3 ist eines der Verbindungseinrichtungen 5 in zwei verschiedenen schematischen Seitenansichten dargestellt.

Die in den Figuren 2 und 3 dargestellte beispielhafte Ausführungsform der erfindungsgemäßen Verbindungseinrichtung 5 umfasst eine Deckenstromschienenvorrichtung 8 und zwei Tragseilvorrichtungen 9.

Die Tragseilvorrichtungen 9 sind jeweils durch Drehgelenke 10 beweglich mit der Deckenstromschienenvorrichtung 8 verbunden. Die Drehgelenke 10 weisen jeweils eine Drehachse 11 auf. Die Drehachsen 11 verlaufen im Wesentlichen parallel zu einer Längsrichtung 12 der Deckenstromschiene 2. Die Tragseilvorrichtungen 9 sind jeweils relativ zur Deckenstromschienenvorrichtung 8 um die Drehachsen 11 schwenkbar. Die Drehgelenke 10 weisen in der beispielhaften Ausführungsform der Figuren 2 und 3 jeweils lediglich einen Bolzen 13 auf, der durch Bohrungen (nicht dargestellt) in der Deckenstromschienenvorrichtung 8 und den Tragseilvorrichtungen 9 verläuft und mit einem Splint 14 gesichert sind. Die Drehgelenke 10 können selbstverständlich auch in anderer Weise oder auch als alternative Gelenkarten ausgebildet sein, um die Bewegungsmöglichkeit um die Drehachse 11 zu realisieren.

Die Deckenstromschienenvorrichtung 8 umfasst die in den Figuren 2 und 3 dargestellten Ausführungsform ein Winkelstück 15 und eine mit dem Winkelstück 15 verbundene Halterung 16 für die Deckenstromschiene. Bei der beispielhaften Ausführungsform der Figuren 2 und 3 ist die Halterung 16 aus mehreren durch Schraubverbindungen gefügten Einzelteilen aufgebaut, die eine formschlüssige und kraftschlüssige Verbindung der Halterung 16 mit der Deckenstromschiene 2 bewirken. In vertikaler Richtung ist die Deckenstromschiene 2 formschlüssig in der Halterung 16 aufgenommen. In der Längsrichtung 12 der Deckenstromschiene 2 ist diese kraftschlüssig in der Halterung 16 geklemmt, um eine Relativbewegung zwischen der Deckenstromschienenvorrichtung 8 und der Deckenstromschiene 2 zu verhindern. Dadurch, dass die Halterung 16 fest mit der Deckenstromschiene 2 verbunden werden kann, ist deren Aufbau und Montage einfach.

Jede der beiden Tragseilvorrichtungen 9 weist in der beispielhaften Ausführungsform der Figuren 2 und 3 jeweils ein Gabelstück 17 und eine auf einem Bolzen 18 gelagerte Seilrolle 19 auf. Zwischen Seilrolle 19 und Bolzen 18 kann eine Gleitlagerung oder Wälzlagerung (nicht dargestellt) ausgebildet sein. Die Seilrolle 19 ist um eine Achse 20 drehbar. Die Seilrolle 19 weist einen umlaufenden Sitz 21 für das Tragseil 4 auf, der entsprechend dimensioniert ist. In der Darstellung in der Figur 2 verlaufen die Achsen 20 der beiden Tragseilvorrichtungen 9 gleich. Diese Stellung entspricht allerdings nicht dem Zustand, wie er sich im montierten Zustand in der Traganordnung 1 einstellt. Vielmehr kippen die vorgespannten Tragseile 4 die beiden Tragseilvorrichtungen 9 auseinander, so dass die Achsen 20 sich kreuzen und die Tragseilvorrichtungen 9 um die Drehachsen 11 der Drehgelenke 10 gegenüber der Darstellung in Figur 2 gekippt sind.

Bei der beispielhaften Ausführungsform der Figuren 2 und 3 weisen die Tragseilvorrichtungen 9 jeweils die Seilrolle 19 auf. Alternativ könnten die Tragseilvorrichtungen 9 beispielsweise auch einen als Öse ausgebildeten Gleitsitz aufweisen, in dem das Tragseil 4 sich jeweils gleitend bewegen kann. Zielführend ist die Realisierung der Bewegungsfreiheit für das Tragseil 4.

Die beispielhafte Verbindungseinrichtung 5 verbindet somit die Deckenstromschiene 2 mit den Tragseilen 4, so dass eine Halterung der Deckenstromschiene 2 durch die Tragseile 4 möglich ist. Hierfür sind die Tragseile 4 auch mit den Stützelementen 2 verbunden, deren Aufbau im Folgenden erklärt wird.

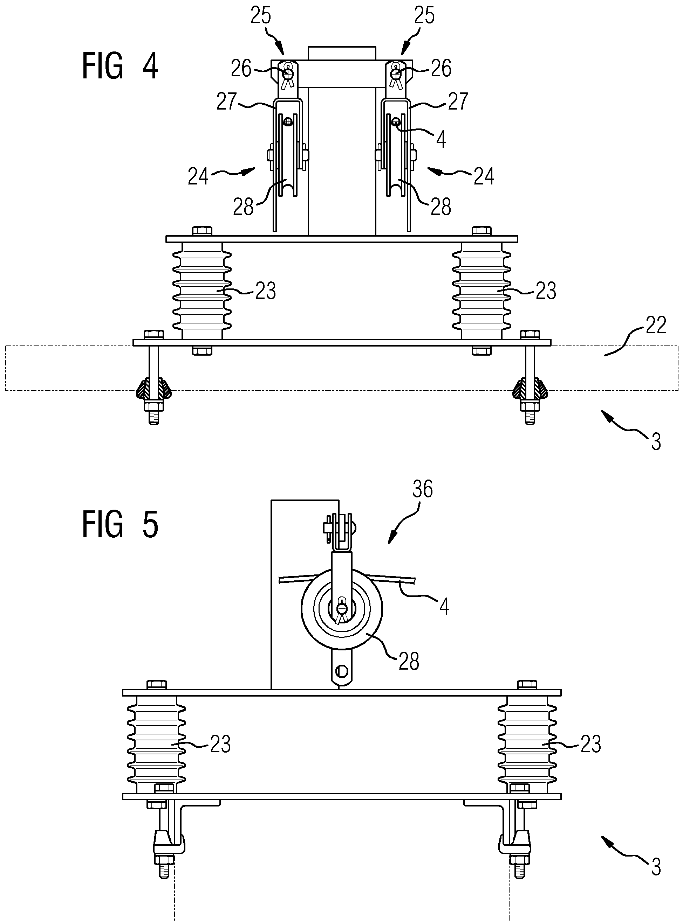

In den Figuren 4 und 5 ist ein Teil eines erfindungsgemäßen Stützelements 3 aus der in Figur 1 dargestellten Traganordnung 1 dargestellt. Das beispielhafte Stützelement 3 umfasst ein mit dem Boden (nicht dargestellt) verbundenes Portal 22 und an Verbindungsstellen 36 zum Tragseil 4 zwei mit dem Portal 22 über Isolatoren 23 verbundene Umlenkeinrichtungen 24. Die Umlenkeinrichtungen 24 sind jeweils über ein Drehgelenk 25 schwenkbar um eine Drehachse 26 zum Portal 22 gelagert. Das Drehgelenk 25 ist in gleicher Weise wie das Drehgelenk 10 der Verbindungseinrichtung 5 aufgebaut. Die Umlenkeinrichtung 24 ist ähnlich wie die Tragseilvorrichtung 9 der Verbindungseinrichtung 5 mit einem Gabelstück 27 und einer drehbar gelagerten Seilrolle 28 aufgebaut. Bei kleineren Traganordnungen kann bereits eine Umlenkeinrichtung 24 am Stützelement 3 ausreichen.

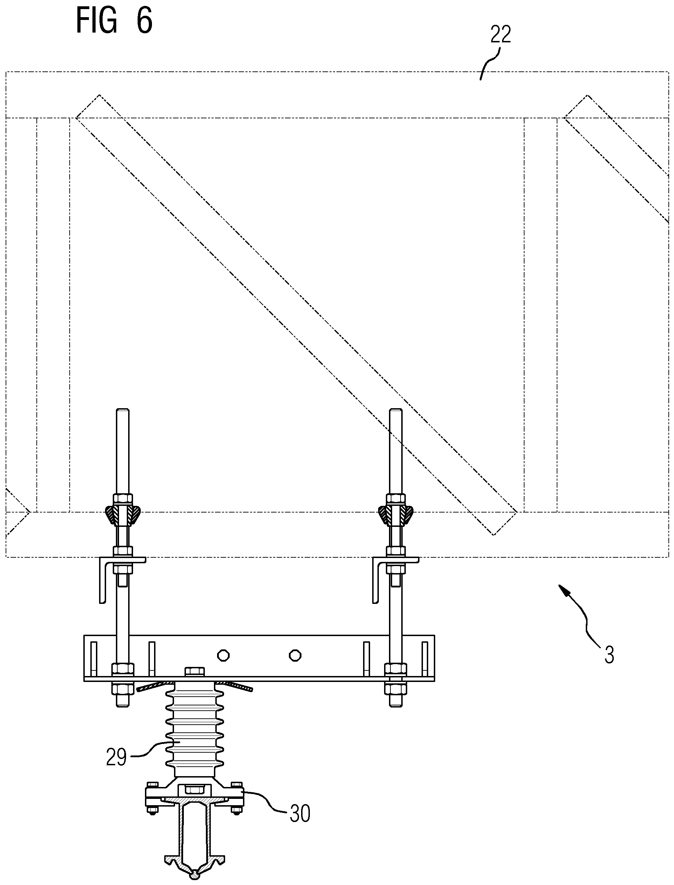

Figur 6 zeigt einen weiteren Teil eines der Stützelemente 3 der Traganordnung 1 aus Figur 1. Der in Figur 6 dargestellte Teil des Stützelements 3 umfasst erneut das Portal 22, an dem eine durch einen Isolator 29 vom Portal 22 getrennte Befestigungseinrichtung 30 angeordnet ist. Die Befestigungseinrichtung 30 ist in bekannter Weise für ein Befestigen und Verbinden der Deckenstromschiene 2 am Portal 22 ausgebildet. In bekannter Weise ist die Befestigungseinrichtung 30 mit Gleitelementen (nicht dargestellt) versehen, durch die die Deckenstromschiene 2 in der Längsrichtung 12 relativ zur Befestigungseinrichtung 30 verschiebbar ist. Dadurch kann ein Längenausgleich stattfinden, der beispielsweise temperaturbedingt nötig ist.

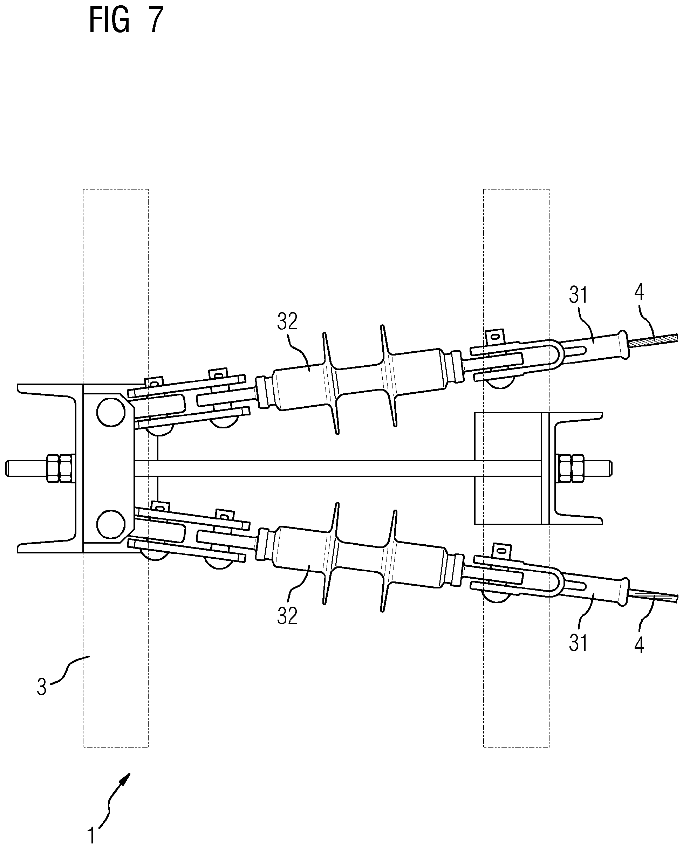

Figur 7 zeigt einen Teil der Traganordnung 1, der außerhalb der Darstellung von Figur 1 liegt. Das in Figur 7 dargestellte Stützelement 7 befindet sich an einem der beiden Enden der Traganordnung 1, wo die Tragseile 4 enden. Zwei Tragseile 4 sind mit dem Stützelement 3 in Figur 7 verbunden. Dafür endet jeweils das Tragseil 4 in einem Schekel 31, der jeweils mit einem Isolator 32 verbunden ist. Der Isolator 32 ist wiederum auf der dem Tragseil 4 gegenüberliegenden Seite gelenkig mit dem Stützelement 3 verbunden. Diese Anbindung der Tragseile 4 am Stützelement 3 ist nur ein Beispiel und kann auch anders realisiert werden.

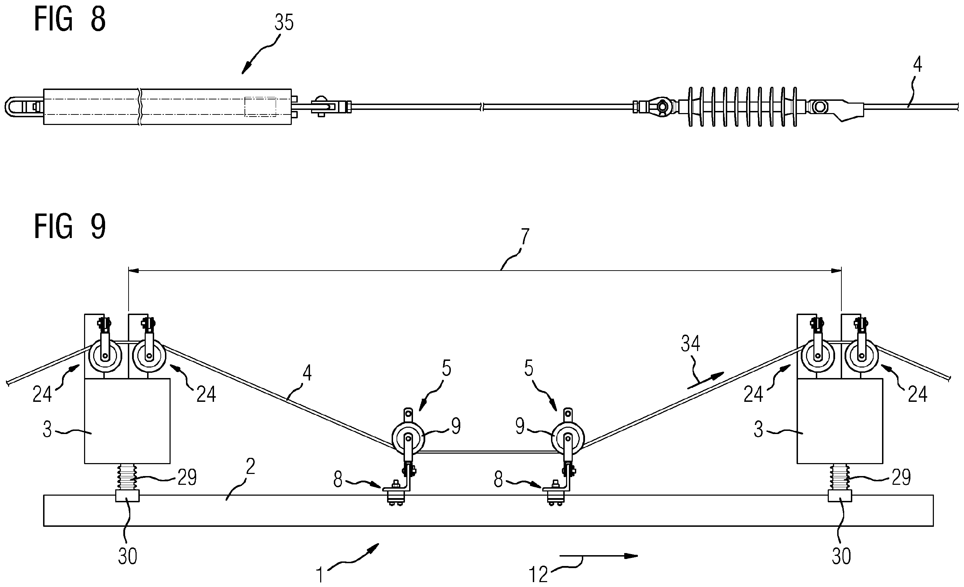

Die Traganordnung 1 weist in der beispielhaften Ausführungsform der Figuren für jedes Tragseil 4 wenigstens eine in Figur 8 schematisch dargestellte Spannvorrichtung 35 auf, die zum Spannen des jeweiligen Tragseils 4 ausgebildet ist. Dies geschieht in an sich bekannter Weise und ist hier nicht weiter ausgeführt.

Wie in Figur 1 dargestellt verläuft jedes vorgespannte Tragseil 4 zick-zack-förmig zwischen den Umlenkeinrichtungen 24 an den Stützelementen 3 und den Verbindungseinrichtungen 5 an den Deckenstromschienen 2 hin und her. Die Umlenkeinrichtungen 24 sind in vertikaler Richtung höher angeordnet als die Verbindungseinrichtungen 5. Bei der beispielhaften Ausführungsform in Figur 1 wird jede Deckenstromschiene 2 durch zwei Tragseile 4 verspannt. Der Abstand 33 dieser Tragseile 4 in einer Querrichtung zur Deckenstromschiene 2 ist an den Verbindungseinrichtungen 5 minimal und an den Umlenkeinrichtungen 24 maximal. Wie in Figur 2 dargestellt, kreuzen sich die Tragseile 4 an der Verbindungseinrichtung 5 nicht, sondern verlaufen mit einem positiven Abstand 33 zueinander. Da die Tragseile 4 in der erfindungsgemäßen Traganordnung 1 sowohl relativ zu den Stützelementen 3 (außer zu den äußersten Stützelementen 3) und relativ zu den Verbindungseinrichtungen 5 beweglich ausgebildet sind, müssen die Enden des Tragseils 4 lediglich an den äußersten Stützelementen 3, von denen eines in Figur 7 dargestellt ist, in Tragseillängsrichtung fest angebracht werden. Dadurch ist die Montage der erfindungsgemäßen Traganordnung 1 besonders einfach und deren konstruktive Ausgestaltung einfach und damit kostengünstig.

Im Folgenden wird mit Bezug auf Figur 9 eine weitere beispielhafte Ausführungsform einer erfindungsgemäßen Traganordnung 1 beschrieben. Der Einfachheit halber wird lediglich auf die Unterschiede zur Traganordnung der Figuren 1 bis 8 eingegangen. Gleiche Teile sind mit gleichen Bezugszeichen bezeichnet.

Im Gegensatz zu der Ausführungsform der Figuren 1 bis 8 weist die Traganordnung 1 in Figur 9 zwei Verbindungseinrichtungen 5 zwischen zwei nebeneinander angeordneten Stützelementen 3 pro Tragseil 4 auf. Hierdurch kann der Abstand 7 zwischen den Stützelementen 3 im Vergleich zu der Ausführungsform der Figuren 1 bis 8 erneut vergrößert werden. In Figur 9 ist die Traganordnung 1 in einer schematischen Seitenansicht dargestellt, in der lediglich ein Tragseil 4 zu sehen ist, das die Deckenstromschiene 2 stützt. Trotzdem weist auch die Traganordnung 1 in der beispielhaften Ausführungsform in Figur 9 wenigstens zwei Tragseile 4 pro Deckenstromschiene 2 auf, die in einer Draufsicht (nicht dargestellt) ähnlich wie in Figur 1 dargestellt verlaufen. Allerdings verlaufen die Tragseile 4 in der Draufsicht zwischen den beiden Verbindungseinrichtungen 5 im Wesentlichen parallel zueinander.

## Patentansprüche

1. Verbindungseinrichtung (5) zum Verbinden einer Deckenstromschiene (2) mit wenigstens einem Tragseil (4),
mit wenigstens einer Deckenstromschienenvorrichtung (8), die zum Verbinden mit der Deckenstromschiene (2) ausgebildet ist, und mit wenigstens einer Tragseilvorrichtung (9), die zum Verbinden mit dem wenigstens einem Tragseil (4) ausgebildet ist,
**dadurch gekennzeichnet, dass** die Tragseilvorrichtung (9) für eine Bewegung des Tragseils (4) relativ zur Tragseilvorrichtung (9) in einer Tragseillängsrichtung (34) ausgebildet ist.

2. Verbindungseinrichtung (5) nach Anspruch 1,
**gekennzeichnet durch**
wenigstens eine weitere Tragseilvorrichtung (9), die zum Verbinden mit wenigstens einem weiteren Tragseil (4) ausgebildet ist.

3. Verbindungseinrichtung (5) nach einem der oben genannten Ansprüche,
**dadurch gekennzeichnet, dass** die wenigstens eine Tragseilvorrichtung (9) wenigstens eine Seilrolle (19) aufweist.

4. Verbindungseinrichtung (5) nach einem der oben genannten Ansprüche,
**dadurch gekennzeichnet, dass** die Verbindungseinrichtung (5) wenigstens ein Gelenk (10) aufweist, durch das die wenigstens eine Tragseilvorrichtung (9) um wenigstens eine parallel zur Längsrichtung der Deckenstromschiene (2) verlaufende Achse (11) relativ zur Deckenstromschienenvorrichtung (8) beweglich ausgebildet ist.

5. Verbindungseinrichtung (5) nach einem der oben genannten Ansprüche,
**dadurch gekennzeichnet, dass** die Deckenstromschienenvorrichtung (8) zum festen Verbinden mit der Deckenstromschiene ausgebildet ist.

6. Traganordnung (1) für wenigstens eine Deckenstromschiene (2),
mit mehreren Stützelementen (3), die die wenigstens eine Deckenstromschiene (2) abstützen,
mit wenigstens einem Tragseil (4), das mit den Stützelementen (3) verbunden ist, und
mit wenigstens einer mit dem wenigstens einen Tragseil (4) verbundenen Verbindungseinrichtung (5), die zum Verbinden der Deckenstromschiene (2) mit dem wenigstens einen Tragseil (4) ausgebildet ist,
**dadurch gekennzeichnet, dass** die wenigstens eine Verbindungseinrichtung (5) nach einem der oben genannten Ansprüche 1 bis 5 ausgebildet ist.

7. Traganordnung (1) nach Anspruch 6,
**dadurch gekennzeichnet, dass** wenigstens eines der Stützelemente (3) wenigstens eine Umlenkeinrichtung (24) aufweist, mittels der das wenigstens eine Tragseil umgelenkt ist und eine Bewegung des Tragseils relativ zum Stützelement in Tragseillängsrichtung möglich ist.

8. Traganordnung (1) nach einem der Ansprüche 6 oder 7,
**dadurch gekennzeichnet, dass** die Traganordnung (1) wenigstens zwei Tragseile (4) aufweist, die beide mit der wenigstens einen Verbindungseinrichtung (5) und den Stützelementen (3) verbunden sind, wobei die Tragseile zwischen den Stützelementen im Wesentlichen x-förmig verlaufen.

9. Traganordnung (1) nach einem der Ansprüche 6 bis 8,
**dadurch gekennzeichnet, dass** die Traganordnung wenigstens eine Spannvorrichtung (35) aufweist, die zum Spannen des wenigstens einen Tragseils ausgebildet ist.

10. Traganordnung (1) nach einem der Ansprüche 6 bis 9,
**dadurch gekennzeichnet, dass** die Stützelemente (3) jeweils wenigstens eine Befestigungseinrichtung (30) aufweisen, die zum Verbinden der wenigstens einen Deckenstromschiene (2) mit dem jeweiligen Stützelement (3) unter Bewegungsfreiheit der Deckenstromschiene in einer Deckenstromschienenlängsrichtung (12) ausgebildet ist.

11. Fahrleitungsanlage zur Energieversorgung von wenigstens einem fahrenden Fahrzeug einer verkehrstechnischen Anlage, mit wenigstens einer Deckenstromschiene und mit wenigstens einer Traganordnung für die Deckenstromschiene,
**dadurch gekennzeichnet, dass** die Traganordnung nach einem der Ansprüche 6 bis 10 ausgebildet ist.

12. Verfahren zum Verbinden einer Deckenstromschiene mit wenigstens einem Tragseil, bei dem die Deckenstromschiene mit wenigstens einer Verbindungseinrichtung und die Verbindungseinrichtung mit dem wenigstens einen Tragseil verbunden werden,
**dadurch gekennzeichnet, dass** das wenigstens eine Tragseil in einer Tragseillängsrichtung beweglich verbunden wird.

## Claims

1. Connecting device (5) for connecting an overhead conductor rail (2) to at least one load-bearing cable (4),
comprising at least one overhead conductor rail apparatus (8) which is designed to be connected to the overhead conductor rail (2), and comprising at least one load-bearing cable apparatus (9) which is designed to be connected to the at least one load-bearing cable (4),
**characterised in that**
the load-bearing cable apparatus (9) is designed to allow movement of the load-bearing cable (4) relative to the load-bearing cable apparatus (9) in a longitudinal direction (34) of the load-bearing cable.

2. Connecting device (5) according to claim 1,
**characterised by**
at least one further load-bearing cable apparatus (9), which is designed to be connected to at least one further load-bearing cable (4).

3. Connecting device (5) according to one of the preceding claims,
**characterised in that**
the at least one load-bearing cable apparatus (9) has at least one cable pulley (19).

4. Connecting device (5) according to one of the preceding claims,
**characterised in that**
the connecting device (5) has at least one joint (10) by means of which the at least one load-bearing cable apparatus (9) is designed to be mobile, about at least one axis (11) which runs parallel to the longitudinal direction of the overhead conductor rail (2), relative to the overhead conductor rail apparatus (8).

5. Connecting device (5) according to one of the preceding claims,
**characterised in that**
the overhead conductor rail apparatus (8) is designed to be connected to the overhead conductor rail in a fixed manner.

6. Load-bearing arrangement (1) for at least one overhead conductor rail (2),
comprising a plurality of support elements (3) which support the at least one overhead conductor rail (2),
comprising at least one load-bearing cable (4) which is connected to the support elements (3), and
comprising at least one connecting device (5) which is connected to the at least one load-bearing cable (4) and is designed to connect the overhead conductor rail (2) to the at least one load-bearing cable (4),
**characterised in that**
the at least one connecting device (5) is designed according to one of the preceding claims 1 to 5.

7. Load-bearing arrangement (1) according to claim 6,
**characterised in that**
at least one of the support elements (3) has at least one guide device (24) by means of which the at least one load-bearing cable is guided and movement of the load-bearing cable relative to the support element is possible in a longitudinal direction of the load-bearing cable.

8. Load-bearing arrangement (1) according to one of claims 6 or 7,
**characterised in that**
the load-bearing arrangement (1) has at least two load-bearing cables (4), both of which are connected to the at least one connecting device (5) and the support elements (3), wherein the load-bearing cables run essentially in the shape of an X between the support elements.

9. Load-bearing arrangement (1) according to one of claims 6 to 8,
**characterised in that**
the load-bearing arrangement has at least one tensioning apparatus (35) which is designed to tension the at least one load-bearing cable.

10. Load-bearing arrangement (1) according to one of claims 6 to 9,
**characterised in that**
the support elements (3) each have at least one attachment device (30) which is designed to connect the at least one overhead conductor rail (2) to the respective support element (3) while allowing freedom of movement of the overhead conductor rail in a longitudinal direction (12) of the overhead conductor rail.

11. Contact line system for supplying energy to at least one traveling vehicle of a traffic engineering system, comprising at least one overhead conductor rail and comprising at least one load-bearing arrangement for the overhead conductor rail,
**characterised in that**
the load-bearing arrangement is designed according to one of claims 6 to 10.

12. Method for connecting an overhead conductor rail to at least one load-bearing cable, wherein the overhead conductor rail is connected to at least one connecting device and the connecting device is connected to the at least one load-bearing cable,
**characterised in that**
the at least one load-bearing cable is so connected as to be mobile in a longitudinal direction of the load-bearing cable.

## Revendications

1. Dispositif (5) de raccordement d'un rail (2) conducteur aérien à au moins un câble (4) porteur, comprenant au moins un système (8) de rail conducteur aérien constitué pour se raccorder au rail (2) conducteur aérien, et au moins un système (9) de câble porteur constitué pour se raccorder au au moins un câble (4) porteur,
**caractérisé en ce que**
le système (9) de câble porteur est constitué pour un déplacement du câble (4) porteur par rapport au système (9) de câble porteur dans une direction (34) longitudinale du câble porteur.

2. Dispositif (5) de raccordement suivant la revendication 1, **caractérisé par**
au moins un autre système (9) de câble porteur constitué pour se raccorder à au moins un autre câble (4) porteur.

3. Dispositif (5) de raccordement suivant l'une des revendications précédentes,
**caractérisé en ce que**
le au moins un système (9) de câble porteur a au moins une poulie (19) à câble.

4. Dispositif (5) de raccordement suivant l'une des revendications précédentes,
**caractérisé en ce que**
le dispositif (5) de raccordement a au moins une articulation (10), par laquelle le au moins un système (9) de câble porteur est constitué de manière mobile par rapport au système (8) de rail conducteur aérien autour d'au moins un axe (11) s'étendant parallèlement à la direction longitudinale du rail (2) conducteur aérien.

5. Dispositif (5) de raccordement suivant l'une des revendications précédentes,
**caractérisé en ce que**
le système (8) de rail conducteur aérien est constitué pour le raccordement fixe au rail conducteur aérien.

6. Agencement (1) porteur d'au moins un rail (2) conducteur aérien,
comprenant plusieurs éléments (3) d'appui, qui appuient le au moins un rail (2) conducteur aérien,
comprenant au moins un câble (4) porteur, qui est raccordé aux éléments (3) d'appui, et
comprenant au moins un dispositif (5) de raccordement, qui est raccordé à le au moins un câble (4) porteur et qui est constitué pour raccorder le rail (2) conducteur aérien à le au moins un câble (4) porteur,
**caractérisé en ce que**
le au moins un dispositif (5) de raccordement est constitué suivant l'une des revendications 1 à 5 précédentes.

7. Agencement (1) porteur suivant la revendication 6,
**caractérisé en ce qu'**
au moins l'un des éléments (3) d'appui a au moins un dispositif (24) de renvoi, au moyen duquel le au moins un câble porteur est renvoyé et un déplacement du câble porteur par rapport à l'élément d'appui dans une direction longitudinale du câble porteur est possible.

8. Agencement (1) porteur suivant l'une des revendications 6 ou 7,
**caractérisé en ce que**
l'agencement (1) porteur a au moins deux câbles (4) porteurs, qui sont raccordés tous deux à le au moins un dispositif (5) de raccordement et aux éléments (3) d'appui, les câbles porteurs s'étendant sensiblement en forme de x entre les éléments d'appui.

9. Agencement (1) porteur suivant l'une des revendications 6 à 8,
**caractérisé en ce que**
l'agencement porteur a au moins un dispositif (35) tendeur constitué pour tendre le au moins un câble porteur.

10. Agencement (1) porteur suivant l'une des revendications 6 à 9,
**caractérisé en ce que**
les éléments (3) d'appui ont chacun au moins un dispositif (30) de fixation constitué pour raccorder le au moins un rail (2) conducteur aérien à l'élément (3) d'appui respectif avec liberté de déplacement du rail conducteur aérien dans une direction (12) longitudinale du rail conducteur aérien.

11. Installation à caténaire d'alimentation en énergie d'au moins un véhicule circulant d'une installation de la technique des transports, comprenant au moins un rail conducteur aérien et comprenant au moins un agencement porteur du rail conducteur aérien,
**caractérisé en ce que**
l'agencement porteur est constitué suivant l'une des revendications 6 à 10.

12. Procédé de raccordement d'un rail conducteur aérien à au moins un dispositif de raccordement et le dispositif de raccordement à le au moins un câble porteur,
**caractérisé en ce que**
l'on raccorde le au moins un câble porteur de manière mobile dans une direction longitudinale du câble porteur.
